# EUROPEAN PATENT APPLICATION

(11) **EP 4 059 826 A1**
(43) Date of publication of application: **21.09.2022**
(21) Application number: 21163627.9
(22) Date of filing: 19.03.2021
(51) Int. Cl.: B63B 21/50, F03D 13/25, D07B 1/14, G01N 27/20

(54) **SAFETY SYSTEM FOR OFFSHORE WIND TURBINE SUPPORTED BY A FLOATING FOUNDATION**

(71) Applicant: Siemens Gamesa Renewable Energy A/S, 7330 Brande (DK)
(72) Inventor: Schmidt, Soeren Adrian, 7100 Vejle (DK)
(74) Representative: SGRE-Association

(57) **Abstract**

There is described a safety system for an offshore wind turbine (100) supported by a floating foundation (114), the floating foundation being secured to a plurality of anchors (131, 132, 13n) at a seabed (104) by a corresponding plurality of mooring lines (121, 122, 12n). The safety system comprises a safety controller (251, 252, 25n) and at least one electrically conductive wire per mooring line (241a, 21b, 242a, 242b, 24na, 24nb), each electrically conductive wire being configured to extend from the safety controller along a mooring line to the corresponding anchor at the seabed and back to the safety controller. The safety controller is configured to determine whether each of the electrically conductive wires is intact or broken, and to issue an alarm signal if it is determined that an electrically conductive wire is broken. Further, an offshore wind turbine comprising such a safety system, and a method (300) of providing safety for an offshore wind turbine supported by a floating foundation are described.

## Description

### Field of Invention

The present invention relates to the field of wind turbines, in particular to safety systems for an offshore wind turbine supported by a floating foundation, the floating foundation being secured to a plurality of anchors at a seabed by a corresponding plurality of mooring lines. The present invention further relates to an offshore wind turbine comprising such a safety system, and a method of providing safety for an offshore wind turbine supported by a floating foundation, the floating foundation being secured to a plurality of anchors at a seabed by a corresponding plurality of mooring lines.

### Art Background

As traditional offshore wind turbine foundations (fixed foundations) are limited to shallow water with a maximum depth of approximately 70 meters, the areas for installation are limited. Therefore, floating foundation types are being developed to unlace the full potential of offshore wind power by allowing installation at water depths of 100m and more. With the introduction of these new foundation types comes the need for safely securing the turbine to the seabed. This is typically solved by the use of mooring lines and seabed anchors. Securing the turbine foundation serves the purpose of keeping the turbine is place, and also that of providing structural stability of the wind turbine and foundation structure during operation. Due to the thrust on the wind turbine rotor during operation, very dangerous situations, where the wind turbine may overturn and fall into the sea, may occur in case of failure in the mooring lines needing. Such situations need immediate action by shutting down the wind turbine.

Accordingly, there may be a need for a safety system capable of reliably detecting damage and failure of the mooring lines and of taking immediate to prevent the wind turbine from overturning and falling into the sea.

### Summary of the Invention

This need may be met by the subject matter according to the independent claims. Advantageous embodiments of the present invention are described by the dependent claims.

According to a first aspect of the invention there is provided a safety system for an offshore wind turbine supported by a floating foundation, the floating foundation being secured to a plurality of anchors at a seabed by a corresponding plurality of mooring lines. The safety system comprises a safety controller and at least one electrically conductive wire per mooring line, each electrically conductive wire being configured to extend from the safety controller along a mooring line to the corresponding anchor at the seabed and back to the safety controller. The safety controller is configured to determine whether each of the electrically conductive wires is intact or broken, and to issue an alarm signal if it is determined that an electrically conductive wire is broken.

This aspect of the invention is based on the idea that at least one electrically conductive wire is provided for each mooring line such that if the mooring line breaks, the at least one electrically conductive wire also breaks. Hence, as long as the at least one electrically conductive wire is intact, it can be assumed that this is also the case for the corresponding mooring line. If the safety controller determines that an electrically conductive wire is broken, e.g., that an electric circuit formed by the electrically conductive wire is broken, the safety controller issues an alarm signal such that corresponding safety measures can be taken to prevent the wind turbine from being damaged or causing danger.

According to an embodiment of the invention, the safety controller is configured to feed a predetermined signal into one end of each electrically conductive wire and to determine whether the same predetermined signal is received at the other end of the electrically conductive wire.

If the predetermined signal is not received at the other end of the electrically conductive wire, i.e., if another signal or no signal at all is received, the safety controller determines that the electrically conductive wire is faulty or broken and issues the alarm signal.

According to a further embodiment of the invention, the predetermined signal is a pulsed signal having at least one of a predetermined frequency, a predetermined phase, and a predetermined duty cycle.

In other words, the predetermined signal is characterized by having a predetermined frequency and/or a predetermined phase and/or a predetermined duty cycle, and thus recognizable.

According to a further embodiment of the invention, the safety system comprises at least two electrically conductive wires per mooring line.

By equipping each mooring line with at least two electrically conductive wires, additional safety can be assured by the corresponding redundancy.

According to a further embodiment of the invention, the safety controller is configured to feed different predetermined signals to each of the at least two electrically conductive wires per mooring line.

By feeding different predetermined signals (i.e., signals having different frequency and/or phase and/or duty cycle) to each of the electrically conductive wires associated with the same mooring line, it is possible to individually monitor each of the redundant electrically conductive wires and furthermore to determine whether the signals have been mixed, e.g., due to electrical contact between two or more electrically conductive wires.

According to a further embodiment of the invention, the at least one electrically conductive wire per mooring line is comprised by a cable configured to extend along the mooring line.

The cable may in particular be fastened to the mooring line, e.g., by strips, or it may be wound around the mooring line or even integrated into the mooring line.

According to a further embodiment of the invention, the alarm signal is a shutdown signal.

The shutdown signal causes a wind turbine to immediately pitch the rotor blades out of the wind and to shut down the generator, in order to reduce the impact of the wind on the wind turbine structural elements.

According to a second aspect of the invention, there is provided an offshore wind turbine comprising (a) a floating foundation configured to be secured to a plurality of anchors at a seabed by a corresponding plurality of mooring lines, (b) a tower arranged on the floating foundation, (c) a nacelle, a rotor and a generator arranged at an upper end of the tower, and (d) a safety system according to the first aspect or any of the embodiments thereof.

This aspect of the invention is based on the same idea as the first aspect discussed above and provides a floating offshore wind turbine that is capable of immediately detecting and reacting on a broken mooring line.

According to a third aspect of the invention, there is provided a method of providing safety for an offshore wind turbine supported by a floating foundation, the floating foundation being secured to a plurality of anchors at a seabed by a corresponding plurality of mooring lines. The method comprises (a) providing a safety controller, (b) providing at least one electrically conductive wire per mooring line, each electrically conductive wire extending from the safety controller along a mooring line to the corresponding anchor at the seabed and back to the safety controller, (c) determining, at the safety controller, whether each of the electrically conductive wires is intact or broken, and (d) issuing an alarm signal if it is determined that an electrically conductive wire is broken.

This aspect of the invention is based on the same idea as the first and second aspects described above.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows an offshore wind turbine supported by a floating foundation.
Figure 2 shows a block diagram of a safety system for an offshore wind turbine supported by a floating foundation according to an embodiment.
Figure 3 shows a flowchart of a method of providing safety for an offshore wind turbine supported by a floating foundation according to an embodiment.

### Detailed Description

The illustration in the drawing is schematic. It is noted that in different figures, similar or identical elements are provided with the same reference numerals or with reference numerals which differ only within the first digit.

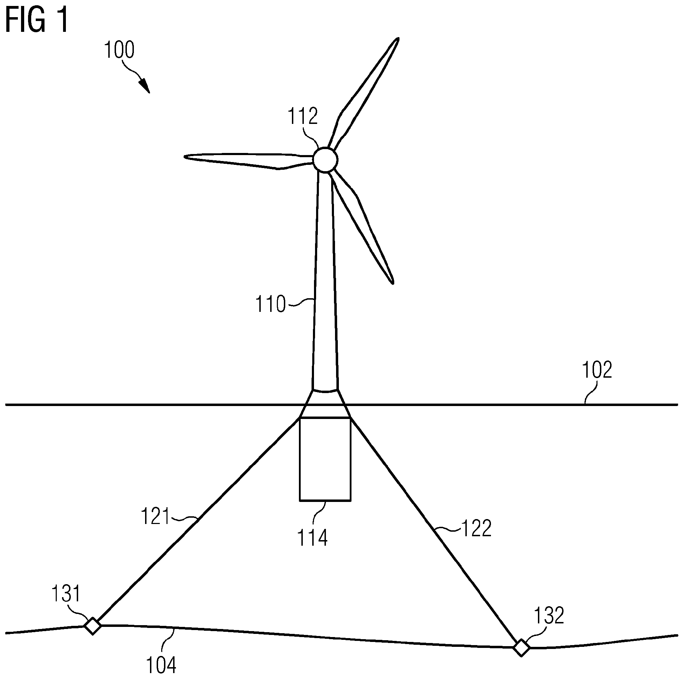

Figure 1 shows an offshore wind turbine 100 supported by a floating foundation 114. The wind turbine 100 comprises a tower 110 supported by the foundation 114 that floats in and below the waterline 102. The tower 110 carries a rotor 112 (with hub and rotor blades) and a nacelle (not shown) at its upper end. The floating foundation is secured to the seabed 104 by mooring lines 121, 122 extending between the foundation 114 and corresponding anchors 131, 132 at the seabed. For reasons of simplicity, Figure 1 only shows two mooring lines 121, 122 and corresponding anchors 131, 132. It should be understood, however, that any other number of mooring lines and corresponding anchors may be used, such as three, four, five, six, eight, twelve, eighteen or any other number larger than two.

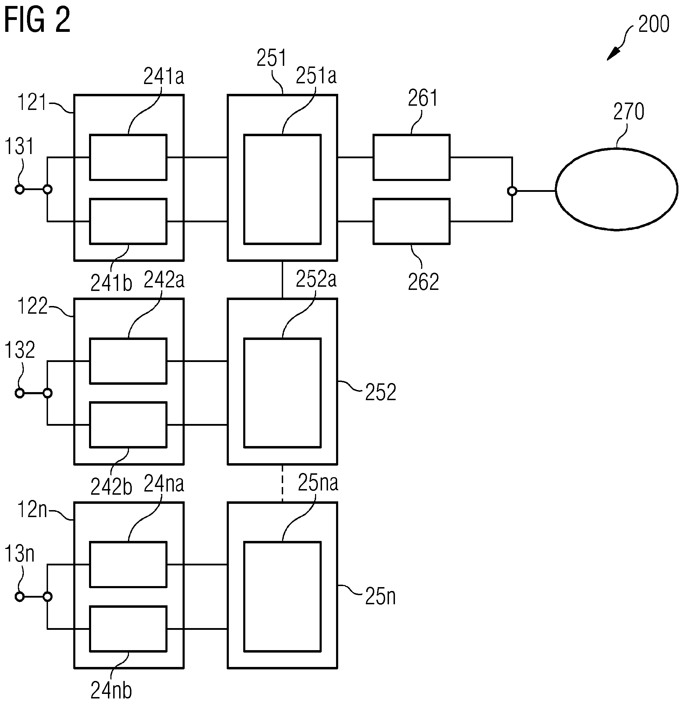

Figure 2 shows a block diagram of a safety system 200 for the offshore wind turbine 100 supported by the floating foundation 114 according to an embodiment. The plurality of mooring lines 121, 122, 12n are shown schematically as boxes. Each mooring line 121, 122, 12n is equipped with two electrically conductive wires 241a, 241b, 242a, 242b, 24na, 24nb extending between a corresponding safety controller module 251, 252, 25n along the mooring line 121, 122, 12n to the corresponding anchor 131, 132, 13n at the seabed 104 and back to the safety controller module 251, 252, 25n. The safety controller module 251 comprises a PL (programmable logic) 251a and is configured to determine whether each of the electrically conductive wires 241a, 241b is intact or broken, and to issue an alarm signal if it is determined that one or both of the electrically conductive wires 241a, 241b is/are broken as this would indicate that the mooring line 121 is broken. The alarm signal will open one or both contactors 261, 262 and result in activation of a safe pitch function 270 which causes the wind turbine controller (not shown) to immediately pitch the rotor blades out of the wind. Similarly, the safety controller module 252 comprises a PL (programmable logic) 252a and is configured to determine whether each of the electrically conductive wires 242a, 242b is intact or broken, and to issue an alarm signal if it is determined that one or both of the electrically conductive wires 242a, 242b is/are broken as this would indicate that the mooring line 122 is broken. Finally, the safety controller module 25n comprises a PL (programmable logic) 25na and is configured to determine whether each of the electrically conductive wires 24na, 24nb is intact or broken, and to issue an alarm signal if it is determined that one or both of the electrically conductive wires 24na, 24nb is/are broken as this would indicate that the mooring line 121 is broken.

As discussed above, each mooring line 121, 122, 12n in the exemplary embodiment shown in Figure 2 comprises two electrically conducting wires 241a/b, 242a/b, and 24na/b. It is explicitly noted that any number of electrically conducting wires per mooring line may be used. That is, 1, 2, 3, 4 or more electrically conductive wire(s) may be used per mooring line.

The depicted safety controller modules 251, 252, 25n may be implemented as separate safety controller modules or they may represent functional modules of a single safety controller.

In order to determine whether an electrically conductive wire is intact or broken, the corresponding safety controller module may feed a predetermined signal into one end of the electrically conductive wire and determine whether the same predetermined signal is received at the other end of the electrically conductive wire. The predetermined signal may in particular be a pulsed signal having at least one of a predetermined frequency, a predetermined phase, and a predetermined duty cycle. By using different frequencies and/or phases and/or duty cycles for each electrically conducting wire, the reliability of the safety system can be further increased.

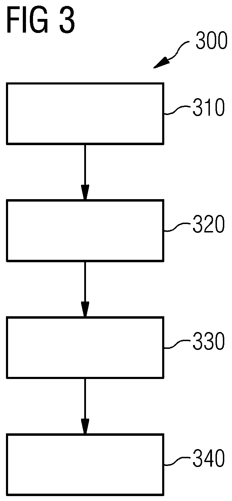

Figure 3 shows a flowchart 300 of a method of providing safety for an offshore wind turbine 100 supported by a floating foundation 114 according to an embodiment, the floating foundation being secured to a plurality of anchors 131, 132, 13n at a seabed 104 by a corresponding plurality of mooring lines 121, 122, 12n. At 310, a safety controller, e.g., in form of safety controller modules 252, 252, 25n as shown in Figure 2, are provided. At 320, at least one electrically conductive wire 241a, 241b, 242a, 242b, 24na, 24nb is provided per mooring line. Each electrically conductive wire 241a, 241b, 242a, 242b, 24na, 24nb extends from the safety controller along a mooring line 121, 122, 12n to the corresponding anchor 131, 132, 13n at the seabed 104 and back to the safety controller. At 330, it is determined by the safety controller, whether each of the electrically conductive wires 241a, 241b, 242a, 242b, 24na, 24nb is intact or broken. If it is determined that one or more electrically conductive wires 241a, 241b, 242a, 242b, 24na, 24nb are broken, an alarm signal is issued at 340.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A safety system for an offshore wind turbine (100) supported by a floating foundation (114), the floating foundation being secured to a plurality of anchors (131, 132, 13n) at a seabed (104) by a corresponding plurality of mooring lines (121, 122, 12n), the system comprising
a safety controller (251, 252, 25n), and
at least one electrically conductive wire (241a, 21b, 242a, 242b, 24na, 24nb) per mooring line, each electrically conductive wire being configured to extend from the safety controller along a mooring line to the corresponding anchor at the seabed and back to the safety controller,
wherein the safety controller is configured to determine whether each of the electrically conductive wires is intact or broken, and to issue an alarm signal if it is determined that an electrically conductive wire is broken.

2. The safety system according to claim 1, wherein the safety controller is configured to feed a predetermined signal into one end of each electrically conductive wire and to determine whether the same predetermined signal is received at the other end of the electrically conductive wire.

3. The safety system according to claim 2, wherein the predetermined signal is a pulsed signal having at least one of a predetermined frequency, a predetermined phase, and a predetermined duty cycle.

4. The safety system according to claim 2 or 3, comprising at least two electrically conductive wires per mooring line.

5. The safety system according to claim 4, wherein the safety controller is configured to feed different predetermined signals to each of the at least two electrically conductive wires per mooring line.

6. The safety system according to any preceding claim, wherein the at least one electrically conductive wire per mooring line is comprised by a cable configured to extend along the mooring line.

7. The safety system according to any preceding claim, wherein the alarm signal is a shutdown signal.

8. An offshore wind turbine comprising
a floating foundation configured to be secured to a plurality of anchors at a seabed by a corresponding plurality of mooring lines,
a tower arranged on the floating foundation,
a nacelle, a rotor and a generator arranged at an upper end of the tower, and
a safety system according to any of the preceding claims.

9. A method of providing safety for an offshore wind turbine (100) supported by a floating foundation (114), the floating foundation being secured to a plurality of anchors (131, 132, 13n) at a seabed (104) by a corresponding plurality of mooring lines (121, 122, 12n), the method comprising
providing (310) a safety controller (252, 252, 25n),
providing (320) at least one electrically conductive wire (241a, 241b, 242a, 242b, 24na, 24nb) per mooring line, each electrically conductive wire extending from the safety controller along a mooring line to the corresponding anchor at the seabed and back to the safety controller,
determining (330), at the safety controller, whether each of the electrically conductive wires is intact or broken, and
issuing (340) an alarm signal if it is determined that an electrically conductive wire is broken.
